Europäisches Patentamt

(19) European Patent Office

Office européen des brevets

(11) Numéro de publication: **0 115 232**
**B1**

(12) **FASCICULE DE BREVET EUROPEEN**

(45) Date de publication du fascicule du brevet:
**06.09.89**

(51) Int. Cl.⁴: **F 16 D  1/06,** B 60 K  17/22,
**F 16 C  3/02**

(21) Numéro de dépôt: **83402470.5**

(22) Date de dépôt: **19.12.83**

(54) **Dispositif de transmission, notamment pour roue motrice de véhicule automobile, et son procédé de fabrication.**

(30) Priorité: **24.12.82  FR 8221773**

(43) Date de publication de la demande:
**08.08.84 Bulletin 84/32**

(45) Mention de la délivrance du brevet:
**06.09.89 Bulletin 89/36**

(84) Etats contractants désignés:
**DE FR GB IT**

(56) Documents cités:
**EP-A- 0 061 368**
**FR-A- 2 073 671**
**FR-A- 2 345 522**
**FR-A- 2 429 928**
**FR-A- 2 472 111**
**GB-A- 147 860**
**GB-A- 1 585 164**
**US-A- 1 508 897**
**US-A- 2 003 508**

(73) Titulaire: **GLAENZER SPICER, 10 Rue J.P. Timbaud,**
**F-78301 Poissy (FR)**

(72) Inventeur: **Poulin, Bernard, La Rocade No 3 155 Avenue**
**Foch, F-78700 Conflans Sainte Honorine (FR)**

(74) Mandataire: **Moncheny, Michel et al, c/o Cabinet**
**Lavoix 2 Place d'Estienne d'Orves, F-75441 Paris**
**Cedex 09 (FR)**

ACTORUM AG

Description

La présente invention concerne un dispositif de transmission entre un groupe moteur et une roue motrice, dans un véhicule automobile, du type comprenant deux joints homocinétiques reliés par un arbre intermédiaire tubulaire, cet arbre étant soudé à au moins une de ses extrémités à un élément du joint adjacent qui délimite des chemins de roulement et qui est réalisé en un acier à hautes caractéristiques ayant subi un traitement thermo-chimique lui conférant une dureté superficielle élevée.

Un tel agencement est décrit dans le document FR-A-2 429 928.

On connaît de plus d'après le brevet FR-A-2 345 522 un agencement dans lequel un arbre de transmission tubulaire est soudé à son extrémité sur une mâchoire de joint de cardan. Cet ensemble soudé est ensuite soumis à un traitement thermique consistant en un chauffage, suivi d'une trempe et d'un revenu, qui a pour but d'améliorer les caractéristiques de résistance structurelle de la pièce et d'éliminer les contraintes résiduelles résultant du soudage.

Un ensemble ainsi traité ne convient pas dans l'application particulière envisagée où l'arbre de transmission porte à au moins une de ses extrémités un élément de joint homocinétique délimitant des chemins de roulement pour des galets ou des billes, lesquels chemins de roulement ont donc à supporter des pressions de contact ou pression de Hertz de valeur élevée de l'ordre de 400 kg/mm² par exemple. Habituellement, cet élément du joint est donc soumis avant son montage sur l'arbre de transmission à un traitement thermochimique destiné à lui donner les caractéristiques souhaitées de dureté superficielle.

On sait par ailleurs que ce type de traitement peut, dans certaines conditions, avoir un effet négatif sur la tenue et la résistance mécanique des pièces qui y sont soumises et l'on a même été conduit pour pallier cet inconvénient à prévoir des réserves, c'est-à-dire à masquer certaines parties de ces pièces pour leur éviter d'entrer en contact avec le gaz de traitement.

C'est ainsi que le document US-A-4 279 528 décrit une tulipe de joint homocinétique tripode comprenant des pétales et un tronçon d'arbre, les réserves précitées étant prévues dans les zones de liaison entre les pétales et le tronçon d'arbre adjacent.

Le but poursuivi par cette invention est de réaliser une transmission du type défini en tête de ce document qui soit, à caractéristiques égales de résistance, plus légère que les transmissions connues et plus efficaces vis-à-vis de l'élimination des vibrations.

Elle a donc pour objet un tel dispositif de transmission, caractérisé en ce que l'arbre tubulaire réalisé également en acier à hautes caractéristiques pour traitement thermochimique est soudé audit élément avant traitement thermochimique de ce dernier, l'ensemble formé par l'arbre et l'élément ayant subi après assemblage le même traitement thermochimique de cémentation ou de carbonitruration, suivi d'une trempe, lui conférant une dureté superficielle élevée.

Suivant d'autres caractéristiques:

– l'arbre tubulaire et le ou chaque élément de joint auquel il est soudé délimitent une cavité fermée;

– l'arbre tubulaire et le ou chaque élément de joint auquel il est soudé délimitent une cavité quasi fermée;

– l'élément du joint comporte une jupe sur laquelle est soudée l'extrémité adjacente de l'arbre intermédiaire;

– cette jupe a un diamètre et une épaisseur de paroi correspondant à ceux de l'extrémité adjacente de l'arbre tubulaire;

– l'arbre comporte un rétreint à au moins une de ses extrémités;

– la jupe comporte une partie épanouie.

L'invention a également pour objet un procédé de fabrication d'un tel dispositif, caractérisé en ce qu'on assemble par soudure un arbre tubulaire et au moins un élément de joint homocinétique, réalisés dans une même nuance à hautes caractéristiques pour traitement thermochimique, ou dans des nuances voisines, puis on soumet l'ensemble à un traitement thermochimique de cémentation ou de carbonitruration, suivi d'une trempe, lui conférant une dureté superficielle élevée.

L'invention sera mieux comprise à l'aide de la description qui va suivre, donnée uniquement à titre d'exemple et faite en se référant aux dessins annexés, sur lesquels:

– la Fig. 1 est une vue en coupe longitudinale d'un dispositif de transmission suivant l'invention;

– les Fig. 2 à 7 sont des vues partielles en coupe de variantes de modes de liaison entre les extrémités de l'arbre et les éléments des joints homocinétiques adjacents.

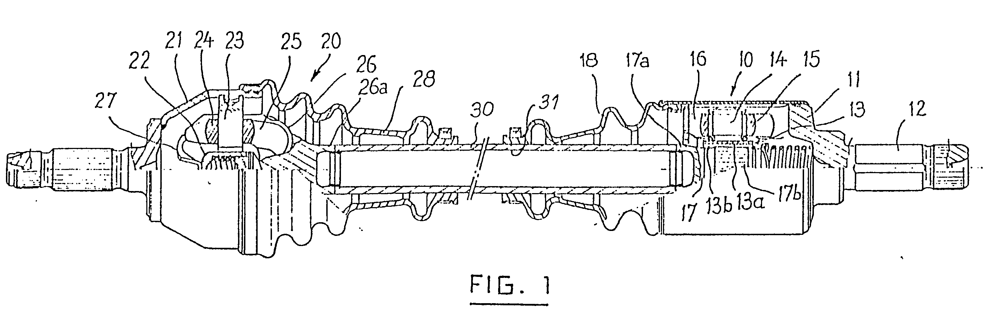

On voit sur la Fig. 1 un dispositif de transmission, en particulier pour transmission latérale de véhicule automobile, comprenant deux joints homocinétiques 10, 20 reliés par un arbre de transmission 30.

Le premier joint 10, de type coulissant comprend une tulipe 11 solidaire d'un tronçon d'arbre 12 destiné à être entraîné à partir du groupe moteur et un tripode 13 portant trois tourillons 14 disposés à 120° sur lesquels sont montés rotatifs et coulissants des galets 15 de forme sphérique reçus dans des pistes rectilignes 16 prévues dans la tulipe. Dans cette réalisation, le tripode comporte un moyeu muni à sa périphérie interne de cannelures ou dentelures 13$^b$ en prise sur des dentelures ou cannelures correspondantes 17$^b$ d'un embout 17 fixé par soudure sur l'extrémité adjacente de l'arbre de liaison. A cet effet, l'embout comporte sur sa face dirigée vers l'arbre 30 une jupe annulaire 17$^a$ dont le diamètre et l'épaisseur de paroi correspondent à ceux du tube qui constitue l'arbre 30.

Le deuxième joint 20 également homocinétique est un joint fixe à tripode comprenant un bol 21 destiné à être relié au moyeu (non représenté) de la roue à entraîner, ce bol étant solidaire d'un tripode 22 sur les trois tourillons 23 duquel sont disposés des galets sphériques 24 reçus dans les chemins de roulement 25 délimités par une tulipe 26. Des moyens connus en soi et comportant notamment une attache élastique 27 sont prévus pour rendre ce joint fixe c'est-à-dire sans possibilité de débattement axial entre le tripode et la tulipe. La tulipe 26 se termine à son extrémité dirigée vers l'arbre de liaison par une jupe 26ª dont le diamètre et l'épaisseur de paroi correspondent à ceux de l'arbre 30.

L'ensemble est complété, de façon classique par des soufflets d'étanchéité 18 et 28.

Suivant l'invention, le matériau constituant l'arbre tubulaire de liaison 30 est un acier pour traitement thermochimique et de préférence en acier identique ou voisin de celui qui constitue l'embout 17 et la tulipe 26. Il s'agit d'un acier à caractéristiques élevées, par exemple un acier au chrome molybdène de type 25 ou 27 CD4 dont la résistance à la traction peut être de l'ordre de 300 kg/mm² et qui après traitement offre une dureté Rockwell C égale ou supérieure à 62.

Suivant l'invention également, l'assemblage par soudure du tube 30 et de ses deux éléments d'extrémité: embout 17 et tulipe 26, est réalisé avant l'opération de traitement thermique que doit subir la tulipe et c'est l'ensemble soudé constitué de l'arbre 30, de l'embout 17 et de la tulipe 26 qui est soumis à ce traitement thermochimique, par exemple, une opération de cémentation ou de carbonitruration suivie d'une trempe, un tel traitement étant en soi connu et n'ayant pas par conséquent à être décrit en détail.

Les soudures elles-mêmes peuvent être réalisées par friction, bombardement électronique ou tout autre procédé convenable.

Il est important de noter que l'arbre tubulaire 30 délimite avec les deux éléments 17, 26 auxquels il est fixé une cavité fermée 31, de sorte que lors du traitement thermochimique, le gaz de traitement ne pénètre pas dans cette cavité et n'affecte pas le métal à l'intérieur du tube. Cette caractéristique est d'autant plus importante que l'épaisseur du tube 30 est plus faible, par exemple inférieure à 1,5 mm.

Le dispositif et le procédé que l'on vient de décrire offrent un faisceau d'avantages très importants par rapport aux diverses solutions connues et contrairement à ce que l'on aurait pu craindre, le traitement de cémentation ou de carbonitruration n'a pas de conséquences néfastes sur la résistance structurelle de l'ensemble ni sur la tenue.

Utilisant un acier à hautes caractéristiques, on peut prévoir un tube de faible diamètre extérieur (27 mm par exemple) et de faible épaisseur (3 ou 3,5 mm) qui est néanmoins capable de transmettre le couple qui peuvent supporter les joints (de l'ordre de 300 m.daN dans l'exemple considéré).

Par rapport à une solution classique (barre de 24 mm de diamètre ou tube serti 35-27 mm, ces deux dimensions représentent respectivement les diamètres externe et interne du tube), le gain de poids procuré en utilisant un tube de liaison (27-20 mm) est de l'ordre de 0,7 kg pour un poids total de l'ensemble de liaison constitué du tube et de ses deux éléments d'extrémité, de l'ordre de 2,4 kg, ce qui est considérable.

Les essais effectués tant au banc que sur véhicule montrent que le comportement dynamique d'une transmission ainsi réalisée est excellent et l'on note en particulier une amélioration très sensible au niveau de l'élimination des diverses vibrations engendrées par le groupe moteur.

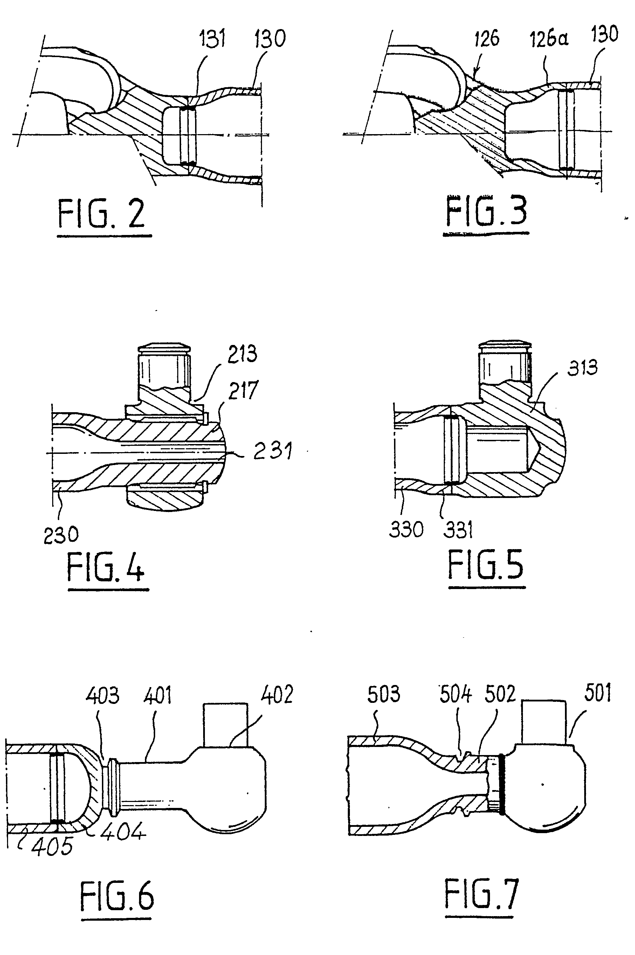

Dans la variante de la Fig. 2, on a représenté le cas où l'on utilise un tube 130 de plus gros diamètre et d'épaisseur plus faible par exemple inférieure ou égale à 1,5 mm, cette configuration pouvant être rendue nécessaire par les caractéristiques de fonctionnement de la transmission. La liaison entre le tube et l'élément adjacent peut alors se faire, soit par l'intermédiaire d'un rétreint 131 du tube (Fig. 2) soit par l'intermédiaire d'un épanouissement 126ª réalisé en dernière opération de formage à froid sur ledit élément adjacent, en l'occurrence la tulipe 126 du joint fixe (Fig. 3).

Suivant une autre variante, l'embout cannelé 217 recevant le tripode 213 du joint coulissant, peut être venu de matière avec l'élément tubulaire 230 (Fig. 4). Dans ce cas, ou bien l'extrémité correspondante du tube est fermée ou bien elle est quasiment fermée, c'est-à-dire ne délimite qu'un passage 231 de faible section et de longueur relativement importante pour empêcher une circulation du gaz de traitement.

On peut également réaliser comme représenté sur la Fig. 5 une liaison directe par soudure du tripode 313 du joint coulissant sur l'arbre tubulaire 330 dont l'extrémité est, le cas échéant, épanouie, en 331. Dans ce cas, chacune des deux extrémités de l'arbre est fermée par un élément actif du joint homocinétique adjacent, comportant des surfaces de roulement devant offrir une haute dureté superficielle.

La Fig. 6 représente une variante dérivée de celle de la Fig. 5, dans laquelle le tronçon d'arbre 401 solidaire du tripode 402 délimite dans sa partie de diamètre réduit une gorge 403 de fixation du goulot d'un soufflet d'étanchéité (non représenté). L'arbre 401 comporte par ailleurs une extrémité 404 épanouie, soudée sur l'arbre 405.

Enfin, la Fig. 7 représente une autre variante, dans laquelle un tripode 501 est soudé sur une extrémité 502 de diamètre réduit de l'arbre creux 503, ce dernier délimitant dans cette même partie de diamètre réduit, une gorge 504 de fixation du goulot du soufflet d'étanchéité. Cette disposition est particulièrement favorable pour une bonne fixation du soufflet et un débattement aisé du joint.

**Revendications**

1. Dispositif de transmission, entre un groupe moteur et une roue motrice, dans un véhicule automobile, du type comprenant deux joints homocinétiques (10, 20) reliés par un arbre intermédiaire tubulaire (30; 130; 230; 330), cet arbre étant soudé à au moins une de ses extrémités à un élément (26; 126) du joint adjacent qui délimite des chemins de roulement et qui est réalisé en un acier à hautes caractéristiques ayant subi un traitement thermochimique lui conférant une dureté superficielle élevée, caractérisé en ce que l'arbre tubulaire (30; 130; 230; 330) réalisé également en acier à hautes caractéristiques pour traitement thermochimique est soudé audit élément (26; 126) avant traitement thermochimique de ce dernier, l'ensemble formé par l'arbre (30) et l'élément (26; 126) ayant subi après assemblage le même traitement thermochimique, de cémentation ou de carbonitruration, suivi d'une trempe lui conférant une dureté superficielle élevée.

2. Dispositif de transmission suivant la revendication 1, caractérisé en ce que l'ensemble (17, 26) formé par l'arbre tubulaire (30; 130; 230; 330) et le ou chaque élément qu'il porte délimite une cavité (31) fermée.

3. Dispositif de transmission suivant la revendication 2, caractérisé en ce que l'épaisseur de paroi du tube (130) est inférieure à 1,5 mm.

4. Dispositif de transmission suivant la revendication 1, caractérisé en ce que l'ensemble (17, 26) formé par l'arbre tubulaire (30; 130; 230; 330) et le ou chaque élément qu'il porte délimite une cavité quasiment fermée.

5. Dispositif suivant la revendication 1, caractérisé en ce que l'élément (26; 126; 313) du joint comporte une jupe (26ª; 126ª) sur laquelle est soudée l'extrémité adjacente de l'arbre intermédiaire (30; 130; 330).

6. Dispositif suivant la revendication 5, caractérisé en ce que ladite jupe (26ª; 126ª) a un diamètre et une épaisseur de paroi correspondant à ceux de l'extrémité adjacente de l'arbre tubulaire (30; 130; 330).

7. Dispositif suivant la revendication 6, caractérisé en ce que l'arbre (130) comporte un rétreint (131) à au moins une de ses extrémités.

8. Dispositif suivant la revendication 6, caractérisé en ce que la jupe (126ª) comporte une partie épanouie.

9. Dispositif suivant l'une quelconque des revendications 1 à 8, caractérisé en ce que, comme connu en soi, les joints homocinétiques (10, 20) sont du type à tripode, dont l'un au moins est coulissant.

10. Dispositif suivant l'une quelconque des revendications 1 à 9, caractérisé en ce que l'arbre (30; 130; 230; 330) et le ou chaque élément de joint sont réalisés en acier au chrome molybdène par exemple de type 25 ou 27 CD4.

11. Dispositif suivant la revendication 1, caractérisé en ce que le ou chaque élément de joint (402) soudé sur l'arbre comporte un tronçon d'arbre (401) de diamètre réduit, dans lequel est délimitée une gorge (403) de fixation d'un goulot de soufflet d'étanchéité.

12. Dispositif suivant la revendication 1, caractérisé en ce que l'arbre tubulaire (503) comporte une partie d'extrémité (502) de diamètre réduit, dans laquelle est délimitée une gorge (504) pour la fixation du goulot d'un soufflet d'étanchéité.

13. Procédé de fabrication d'un dispositif de transmission suivant l'une quelconque des revendications 1 à 12, caractérisé en ce qu'on assemble par soudure un arbre tubulaire (30; 130; 230; 330) et au moins un élément (26; 126) de joint homocinétique, réalisés dans une même nuance d'acier à hautes caractéristiques pour traitement thermochimique, ou dans des nuances voisines, puis on soumet l'ensemble à un traitement thermochimique de cémentation ou de carbonitruration, suivi d'une trempe lui conférant une dureté superficielle élevée.

## Claims

1. A transmission device between a motor unit and a driving wheel in a motor vehicle, of the kind comprising two homokinetic joints (10, 20) interconnected via an intermediate tubular shaft (30; 130; 230; 330) which is welded at at least one of its ends to an element (26; 126) of the adjacent joint which bounds raceways and is made from a high-property steel which has received a thermochemical treatment imparting a high surface hardness thereto, characterized in that the tubular shaft (30; 130; 230; 330), which is also made from a steel having high properties for thermochemical treatment is welded to said element (26; 126) prior to the thermochemical treatment thereof, the assembly formed by the shaft (30) and the element (26; 126) having undergone after assembly the same thermochemical cementation or carbonitriding treatment imparting a high surface hardness thereto.

2. A transmission device according to claim 1, characterized in that the assembly (17, 26) formed by the tubular shaft (30; 130; 230; 330) and the or each element borne thereby bounds a closed cavity (31).

3. A transmission device according to claim 2, characterized in that the thickness of the wall of the tube (130) is less than 1.5 mm.

4. A transmission device according to claim 1, characterized in that the assembly (17, 26) formed by the tubular shaft (30; 130; 230; 330) and the or each element borne thereby bounds a substantially closed cavity.

5. A transmission device according to claim 1, characterized in that the element (26; 126; 313) of the joint comprises a skirt (26a; 126a) to which the adjacent end of the intermediate shaft (30; 130; 330) is welded.

6. A transmission device according to claim 5, characterized in that the skirt (26a; 126a) has a diameter and a wall thickness corresponding to those of the adjacent end portion of the tubular shaft (30; 130; 330).

7. A transmission device according to claim 6, characterized in that the shaft (130) comprises a narrowed portion (131) at at least one of its ends.

8. A transmission device according to claim 6, characterized in that the skirt (126a) comprises a flared portion.

9. A transmission device according to any of claims 1 to 8, characterized in that the homokinetic joints (10, 20) are in known manner of the tripod type, at least one of the joints being slidable.

10. A transmission device according to any of claims 1 to 9, characterized in that the shaft (30; 130; 230; 330) and the or each element of the joint are made from chromiummolybdenum steel, for example, of type 25 or 27 CD4.

11. A transmission device according to claim 1, characterized in that the or each joint element (402) welded to the shaft comprises a shaft portion (401) of reduced diameter which is formed with a groove (403) for the attachment of the entrance portion of a sealing gaiter.

12. A transmission device according to claim 1, characterized in that the tubular shaft (503) comprises an end portion (502) of reduced diameter which is formed with a groove (504) for the attachment of the entrance portion of a sealing gaiter.

13. A method of manufacturing a transmission device according to any of claims 1 to 12, characterized in that a tubular shaft (30; 230; 330) and at least one homokinetic joint element (26; 126) which are made from the same steel grade having high properties for thermochemical treatment or from closely similar steel grades are assembled by welding, whereafter the assembly is subjected to a thermochemical cementation for carbonitriding treatment imparting a hard surface hardness thereto, followed by a quenching.

## Patentansprüche

1. Übertragungsvorrichtung zwischen einer Antriebsgruppe und einem Antriebsrad in einem Kraftfahrzeug, von der Art, die zwei durch eine rohrförmige Zwischenwelle (30; 130; 230; 330) verbundene Gleichlaufgelenke (10, 20) umfaßt, wobei die Welle an mindestens einem ihrer Enden an ein Element (26; 126) des anschließenden Gelenkes angeschweißt ist, das Rollenbahnen bildet und das aus einem hochfesten Stahl ausgeführt ist, der einer thermochemischen Behandlung unterzogen ist, die ihm gesteigerte Oberflächenhärte verleiht, dadurch gekennzeichnet, daß die rohrförmige Zwischenwelle (30; 130; 230; 330), die ebenfalls aus einem hochfesten Stahl für eine thermochemische Behandlung besteht, an das genannte Element (26; 126) vor der thermochemischen Behandlung des letzteren angeschweißt ist, wobei die aus der Welle (30) und dem Element (26; 126) gebildete Anordnung nach dem Zusammenfügen der gleichen thermochemischen Behandlung eines Aufkohlens (Zementierens) oder eines Karbonitrierens, gefolgt von einem Abschreckhärten, unterzogen ist, die ihr eine gesteigerte Oberflächenhärte verleiht.

2. Übertragungsvorrichtung gemäß Anspruch 1, dadurch gekennzeichnet, daß die aus der rohrförmigen Welle (30; 130; 230; 330) und dem oder den Elementen, die sie trägt, gebildete Anordnung (17, 26) einen geschlossenen Hohlraum (31) bildet.

3. Übertragungsvorrichtung gemäß Anspruch 2, dadurch gekennzeichnet, daß die Dicke der Rohrwand (130) geringer als 1,5 mm ist.

4. Übertragungsvorrichtung gemäß Anspruch 1, dadurch gekennzeichnet, daß die aus der rohrförmigen Welle (30; 130; 230; 330) und dem oder den Elementen, die sie trägt, gebildete Anordnung (17, 26) einen im wesentlichen geschlossenen Hohlraum bildet.

5. Vorrichtung gemäß Anspruch 1, dadurch gekennzeichnet, daß das Element (26; 126; 313) des Gelenkes eine Glocke (26a; 126a) umfaßt, an der das anschließende Ende der Zwischenwelle (30; 130; 330) angeschweißt ist.

6. Vorrichtung gemäß Anspruch 5, dadurch gekennzeichnet, daß die genannte Glocke (26a; 126a) einen Durchmesser und eine Wanddicke hat, die denen des anschließenden Endes der rohrförmigen Welle (30; 130; 330) entsprechen.

7. Vorrichtung gemäß Anspruch 6, dadurch gekennzeichnet, daß die Welle (130) eine Querschnittsverminderung (131) an mindestens einem ihrer Enden umfaßt.

8. Vorrichtung gemäß Anspruch 6, dadurch gekennzeichnet, daß die Glocke (126a) einen querschnittserweiterten Abschnitt umfaßt.

9. Vorrichtung gemäß einem der Ansprüche 1 bis 8, dadurch gekennzeichnet, daß, wie an sich bekannt, die Gleichlaufgelenke (10, 20) in Tripodenbauart ausgeführt sind, wobei zumindest eines zusammenschiebbar ist.

10. Vorrichtung gemäß einem der Ansprüche 1 bis 9, dadurch gekennzeichnet, daß die Welle (30; 130; 230; 330) und das oder die Elemente der Gelenke aus Chrom-Molybdän-Stahl, zum Beispiel vom Typ 25 oder 27 CD4 ausgeführt sind.

11. Vorrichtung gemäß Anspruch 1, dadurch gekennzeichnet, daß das oder die an die Welle angeschweißten Elemente der Gelenke (402) einen Wellenabschnitt (401) von verringertem Durchmesser umfassen, in dem eine Rille (403) zur Festlegung des Bundes einer Dichtungsmanschette ausgebildet ist.

12. Vorrichtung gemäß Anspruch 1, dadurch gekennzeichnet, daß die rohrförmige Welle (503) einen Endbereich (502) von verringertem Durchmesser umfaßt, in dem eine Rille (504) zur Festlegung des Bundes einer Dichtungsmanschette ausgebildet ist.

13. Verfahren zur Herstellung einer Übertragungsvorrichtung gemäß einem der Ansprüche 1 bis 12, dadurch gekennzeichnet, daß eine rohrförmige Welle (30; 130; 230; 330) und mindestens ein Element (26; 126) eines Gleichlaufgelenkes, die aus gleichen oder ähnlichen Sorten von hochfestem Stahl für eine thermochemische Behandlung bestehen, durch Schweißung verbunden werden und anschließend die Anordnung der thermochemischen Behandlung eines Aufkohlens (Zementierens) oder eines Karbonitrierens, gefolgt von einem Abschreckhärten, unterzogen wird, die ihr eine gesteigerte Oberflächenhärte verleiht.

FIG. 1

FIG. 2

FIG.3

FIG. 4

FIG.5

FIG.6

FIG.7